# EUROPEAN PATENT APPLICATION

(11) **EP 4 817 817 A1**
(43) Date of publication of application: **07.10.2026**
(21) Application number: 25167275.4
(22) Date of filing: 31.03.2025
(51) Int. Cl.: B25J 15/00, B25J 15/02, F16H 19/06

(54) **ROBOTIC FINGER JOINTS WITH FREELY SUSPENDED SCREW DRIVES**

(71) Applicant: mimic robotics AG, 8092 Zurich (CH)
(72) Inventor: Wand, Philipp, Zurich (CH); Weirich, Stefan, Schlieren (CH); Gravert, Stephan-Daniel, Zurich (CH); Bieri, Nathalie, Zurich (CH)
(74) Representative: SSM Sandmair

(57) **Abstract**

A drive unit (100) for a finger joint (402) of a robotic hand (400) includes a screw assembly (102) with a nut (104) and screw shaft (106), a motor to drive the nut (104), and a tendon mechanism (108) to actuate the finger joint (402). The screw shaft (106) is freely suspended within a housing, and the tendon mechanism (108) exerts an axial pulling force on the screw shaft (106).

## Description

### TECHNICAL FIELD

This disclosure relates generally to the field of robotics, and more specifically to dexterous robotic hands, particularly those designed for complex manipulation tasks requiring precise control and force application.

### BACKGROUND

Dexterous robotic hand designs sometimes employ ball screw mechanisms coupled with linear guides for finger actuation. For example, Kim, U. et al. Integrated linkage-driven dexterous anthropomorphic robotic hand. Nat Commun 12, 7177 (2021) discloses, a dedicated ball screw and motor for each finger, converting rotational motion to linear motion, which is then translated into finger movement through linkages.

Another example is disclosed in Ding, Ye et al. Biomechanical and Physiological Evaluation of Multi-Joint Assistance With Soft Exosuits. IEEE Transactions on Neural Systems and Rehabilitation Engineering. 99. 1-1. 10.1109 (2016), which describes a guided ball screw that converts the rotary motion of a motor into linear motion, which then directly pulls or releases the inner tendon of a Bowden cable. The linear motion is transferred through the Bowden cable to control distant actuators or robotic joints.

While these and similar designs may offer a degree of precision, they can be bulky and space-inefficient, especially when attempting to integrate multiple degrees of freedom within a compact form factor. Furthermore, the inherent mechanical complexity of these systems can limit their ability to withstand significant external forces, potentially rendering them susceptible to damage from impacts or shocks.

It is therefore an objective of the present disclosure to provide an actuation mechanism for a robotic hand that overcomes the above limitations at least in part, offering improved power density, reduced assembly space, and enhanced resistance to external forces.

### SUMMARY OF THE DISCLOSURE

The above and other objectives may be achieved by the subject-matter defined in the independent claims. Advantageous modifications of embodiments of the present disclosure are defined in the dependent claims as well as in the description and the drawings.

One aspect of the present disclosure relates to a drive unit, which may also more generally be referred to as an actuation mechanism, for a finger joint of a robotic hand.

It may be provided that the drive unit comprises a screw assembly. The screw assembly may comprise a nut and a screw shaft. The nut may be rotatably arranged, e.g., mounted, within a housing. The drive unit may comprise a motor configured to drive the nut. It may be provided that the screw shaft is freely suspended.

It may be provided that the drive unit comprises a tendon mechanism for actuating the finger joint when the screw shaft is moved axially. The tendon mechanism may be configured to exert an essentially axial pulling force on the screw shaft. Preferably the tendon mechanism is pre-tensioned.

Accordingly, the screw assembly can provide high precision in converting rotational motion of the motor to linear motion of the screw shaft. This precision may be beneficial for tasks requiring fine motor skills, such as grasping small objects or performing delicate manipulations.

The integration of the motor, screw assembly, and tendon mechanism into a drive unit can result in a compact and space-efficient design. This compactness may be particularly advantageous for robotic hands, especially dexterous robotic hands, where space constraints are significant. The design may allow for more joints and degrees of freedom within a limited space, thereby enhancing the dexterity and functionality of the robotic hand.

The screw assembly can handle high axial loads efficiently, which may be beneficial for robotic hands that need to exert significant force, such as lifting heavy objects or applying strong grips. The high load capacity may ensure that the drive unit can perform demanding tasks without compromising performance or durability.

The tendon mechanism, especially when pre-tensioned, can allow for compliant behavior under external loads. This means the robotic hand can adapt to external forces and maintain functionality without causing damage to the object being manipulated or the robotic hand itself. Compliance may be important for safety in human-robot interaction, as it may prevent excessive force application and potential injury.

The design of the drive unit design can allow for easy adaptation to different finger joints and robotic hand configurations. The modular nature of the drive unit can mean it can be customized for various applications, from industrial robots to prosthetic devices. This versatility makes the present disclosure applicable across a wide range of fields, enhancing its technological viability.

The drive unit can contribute to facilitate precise control and high load capacity of the robotic hand. The ability to perform complex movements and exert controlled forces may allow the robotic hand, e.g., to mimic human hand functions closely. This may be particularly beneficial for applications requiring high levels of dexterity, such as medical procedures, assembly tasks, and service robotics.

The design of the drive unit can allow for scalability in robotic hand designs. Multiple drive units may be integrated into a single robotic hand, each controlling a different finger joint. This scalability may enable the creation of robotic hands with varying degrees of complexity and functionality, tailored to specific application needs.

It may be provided that the screw assembly is a ball screw assembly including a ball nut and a ball screw shaft.

Accordingly, a ball screw assembly may provide superior precision and smooth operation compared to traditional screw assemblies. The inclusion of ball bearings within the ball nut may significantly reduce friction, allowing for more accurate and consistent conversion of rotational motion to linear motion. This precision may be beneficial for tasks requiring fine motor skills, such as grasping small objects or performing delicate manipulations.

The reduced friction in the ball screw assembly may lead to lower wear and tear on the components. The ball bearings may minimize the contact between the nut and the screw shaft, resulting in less abrasion and longer service life. This reduction in wear may decrease maintenance requirements, making the drive unit more reliable and cost-effective over time.

The ball screw assembly may also enhance the load-carrying capacity of the drive unit. The efficient transfer of forces through the ball bearings may allow the assembly to handle higher axial loads without compromising performance. This increased load capacity may be beneficial for robotic hands that need to exert significant force, such as lifting heavy objects or applying strong grips.

It may be provided that the nut, which is rotatably mounted in the housing, is axially mounted via at least one roller bearing, preferably being an axial roller bearing.

Roller bearings constitute a particularly robust and still cost-efficient way of fixing the nut in the axial direction. Forces applied axially can be handled efficiently by roller bearings.

It may be provided that the motor is an electric motor having a rotor and a stator. The rotor may be rotatably coupled to the nut. The stator may be rotatably fixed. Optionally, the motor may be a brushless DC motor.

This configuration may offer several technical advantages that enhance the efficiency and compactness of the drive unit for a robotic hand. The coupling of the rotor to the nut can provide direct and efficient transmission of rotational motion, which may enhance the precision and responsiveness of the drive unit. This direct coupling may reduce energy losses and improve the overall efficiency of the system.

The use of an electric motor, particularly a brushless DC motor, may offer high energy efficiency and low maintenance requirements. Brushless DC motors are known for their smooth operation and long service life due to the absence of brushes, which may reduce wear and tear. This efficiency may be advantageous for battery-powered robotic systems, contributing to longer operational times and reduced energy costs.

It may be provided that the motor is arranged within the housing.

Arranging the motor within the housing may result in a compact and integrated design. This compactness may be particularly advantageous for robotic hands, where space constraints are significant. Integrating the motor within the housing may allow for more streamlined and space-efficient designs, enhancing the dexterity and functionality of the robotic hand.

It may be provided that the drive unit further comprises a rotation blocking mechanism and/or a rotation constrainment mechanism. The rotation blocking mechanism may be configured to block rotational movement of the screw shaft around its axial main axis. The rotation constrainment mechanism may be configured to constrain rotational movement of the screw shaft around its axial main axis.

The inclusion of a rotation blocking mechanism and/or rotation constrainment mechanism may provide increased stability and control during operation. By preventing or constraining unwanted rotational movement of the screw shaft which may occur in response to the nut rotating, these mechanisms may ensure that the linear motion generated by the screw assembly is precise and consistent. This stability may be beneficial for tasks requiring accurate positioning and movement, such as grasping and manipulating objects.

It may be provided that the screw shaft is applied with rotational friction by a friction applying unit constituting a rotation constrainment mechanism. The friction applying unit may be a component with a hole through which the screw shaft is guided to apply friction to the screw shaft. The component may be a plate. The hole may be an elongated hole.

The optional friction applying unit may further enhance control by applying rotational friction to the screw shaft. This friction may prevent unintended rotational movement and ensure smoother operation. The component with a hole through which the screw shaft is guided may provide a simple yet effective means of applying friction, contributing to the overall reliability of the drive unit.

The use of a plate with an elongated hole as the friction applying unit may offer additional advantages. The elongated hole may allow for a degree of freedom for the screw shaft in the direction of the elongation of the elongated hole. This reduces wear and tear on the screw shaft.

It may be provided that the tendon mechanism comprises a first tendon. One end of the first tendon may be fixed to a first engagement point of the finger joint and another end of the first tendon may be fixed to a first end of the screw shaft.

The inclusion of a first tendon fixed to specific engagement points may provide precise and controlled actuation of the finger joint. By exerting an axial pulling force on the screw shaft, the tendon mechanism may ensure accurate movement of the finger joint, which may be beneficial for tasks requiring fine motor skills, such as grasping and manipulating objects.

It may be provided that the tendon mechanism comprises a second tendon. One end of the second tendon may be fixed to a second engagement point of the finger joint and another end of the second tendon may be fixed to a second end of the screw shaft.

The optional inclusion of a second tendon may further enhance the control and stability of the finger joint. By having tendons fixed to both ends of the screw shaft and corresponding engagement points on the finger joint, the mechanism may provide balanced and coordinated movement. This dual-tendon configuration may be particularly advantageous for tasks requiring synchronized and stable finger movements.

In both configurations, the tendon mechanism may also contribute to the compactness and efficiency of the drive unit. Tendons are flexible and lightweight components that can be easily integrated into the design, allowing for a space-efficient solution. This compactness may be beneficial for robotic hands, where space constraints are significant.

It may be provided that the fixing of the one end of the first tendon to the first end of the screw shaft is designed to have a radial offset with respect to an axial main axis of the screw shaft. It may be provided that the fixing of the one end of the second tendon to the second end of the screw shaft is designed to have a radial offset with respect to the axial main axis of the screw shaft.

By offsetting the tendon fixing points from the axial main axis, the mechanism may create a moment arm that enhances the rotational effect on the screw shaft, leading to more efficient and powerful movement. In other words, offsetting the tendon fixing points radially with respect to the axial main axis of the screw shaft, provides further friction on the screw shaft rotating through the nut and thereby preventing that the screw shaft rotates together with the nut.

It may be provided that pre-tension is applied to the tendon mechanism by a first tensioning unit being arranged at the first tendon, and, optionally, by a second tensioning unit being arranged at the second tendon.

The application of pre-tension to the tendon mechanism by a first tensioning unit may provide improved responsiveness and control during actuation of the finger joint. Pre-tensioning the tendons may ensure that they are always under a certain level of tension, which may reduce slack and improve the precision of movements. This enhanced control may be beneficial for tasks requiring fine motor skills, such as grasping and manipulating objects.

The use of tensioning units may also contribute to the stability and consistency of the drive unit's operation. By maintaining a constant tension in the tendons, the mechanism may prevent fluctuations in force transmission, leading to smoother and more predictable movements. This stability may be particularly advantageous for applications requiring steady and reliable finger actions.

It may be provided that the first tensioning unit is arranged at the first engagement point of the finger joint or at the first end of the screw shaft to which the first tendon is fixed. It may be provided that the second tensioning unit is arranged at the second engagement point of the finger joint or at the second end of the screw shaft to which the second tendon is fixed.

Arranging the tensioning units at strategic points, such as the engagement points of the finger joint or the ends of the screw shaft, may provide direct and efficient tension application. This strategic placement may ensure that the tendons are optimally tensioned for precise control of finger joint movements, which may be beneficial for tasks requiring fine motor skills, such as grasping and manipulating objects.

It may be provided that the first and/or second tensioning unit is configured to pull the first tendon tight manually and then being fixed in place with a screw.

The ability to manually pull the tendons tight and fix them in place with a screw may offer straightforward and reliable tension adjustment. This manual adjustment may allow for quick and easy calibration of tendon tension, ensuring consistent performance across different operational scenarios. This ease of adjustment may be particularly advantageous for applications requiring frequent reconfiguration or fine-tuning.

It may be provided that the first and/or second tensioning unit is configured to fix the first tendon to a threaded component using a crimp, such as a looped end or ball crimp which can then be tensioned by turning the threaded component. In addition or alternatively, the first and/or second tensioning unit may be configured to adjust a length of the first and/or second tension using a threaded component which is configured to increase and decrease the length of the first and/or second tendon in response to turning the same. This may include increasing the length of the path the tendon is guided on, thereby elongating and/or stretching the tendon to eliminate slack and apply a pre-tension.

Using a threaded component with a crimp, such as a looped end or ball crimp, may provide secure and adjustable tensioning of the tendons. This configuration may allow for precise control over tendon tension by simply turning the threaded component, enabling fine adjustments to suit specific operational needs. This precision may enhance the reliability and accuracy of the drive unit, which may be crucial for applications requiring stable and coordinated finger actions.

It may be provided that the drive unit comprises a tension spring mechanism being attached to one of the first or second end of the screw shaft. The tension spring mechanism may be configured for applying a pulling force shifting the operating point of the drive unit in that a resting position of the joint is a pre-defined position of the joint. In one example, such a pre-defined position may be an end position of the joint.

The inclusion of a tension spring mechanism may provide a consistent pulling force on the screw shaft, ensuring that the finger joint returns to a defined end position when at rest. This feature may be beneficial for tasks requiring a high and/or steady gripping force applied by the finger joint. The energy consumption of the robotic hand can be reduced by using the mechanism and thereby lowering the need for the motor applying the force, e.g., for gripping. It is therefore preferred that the end position of the joint corresponds to a gripping position of the robotic finger joint.

This is applicable also to any other embodiments of a drive unit in which the screw shaft is not freely suspended.

It may be provided that the tension spring mechanism is adjustable, optionally by moving the position of the tension spring mechanism in a direction parallel to the axial main axis of the screw shaft. This may include moving the position of the attachment point and/or fixation of the spring to further stretch or relax the spring.

The adjustability of the tension spring mechanism may provide customizable force application to the screw shaft, allowing for fine-tuning of the pulling force exerted on the finger joint. By adjusting the position of the tension spring mechanism, operators may tailor the resting position and responsiveness of the joint to suit specific operational needs.

In a configuration in which multiple drive units as described in this disclosure are integrated into a robotic hand, such a configuration may comprise means for adjusting multiple tension spring mechanisms (for the multiple drive units) at the same time. This may include a single manual and/or actuated movement of the attachment points.

It may be provided that the tendon mechanism is designed as a Bowden cable mechanism.

The design of the tendon mechanism as a Bowden cable mechanism may provide flexible and efficient transmission of forces. Bowden cables are known for their ability to transmit motion over a distance while allowing for flexible routing. This flexibility may be beneficial for integrating the drive unit into compact and complex robotic hand designs, where space constraints and routing challenges are significant.

It may be provided that tendon(s) of the tendon mechanism are at least for a partial length of the respective tendon(s) guided through single or multi-layered sheath(s) to ensure low friction of the tendon(s) when moving within the sheath(s).

Guiding the tendons through single or multi-layered sheaths may ensure low friction during movement. The sheaths may reduce the contact between the tendons and surrounding components, minimizing friction and wear. This low friction may enhance the smoothness and responsiveness of the tendon mechanism, which may be crucial for tasks requiring precise and controlled finger movements.

The use of sheaths may also protect the tendons from external contaminants and mechanical damage. By enclosing the tendons within protective layers, the mechanism may prevent dirt, dust, and other particles from interfering with tendon operation. This protection may lead to longer service life and reduced maintenance requirements, making the drive unit more reliable and cost-effective over time.

It may be provided that ends of the sheath(s) are fixedly mounted such that the at least partial length of the respective tendon(s) being guided through the sheath(s) remains constant.

Fixedly mounting the ends of the sheaths may ensure that the guided length of the tendons remains constant during operation. This stability may prevent variations in tendon length, which can lead to inconsistent force transmission and erratic movements. Maintaining a constant guided length may be beneficial for tasks requiring precise and predictable finger joint movements, such as grasping and manipulating objects.

The fixed mounting of the sheath ends may also enhance the overall durability and reliability of the tendon mechanism. By securely anchoring the sheaths, the mechanism may reduce the risk of sheath displacement or deformation, which can compromise tendon guidance and increase friction. This secure mounting may lead to longer service life and reduced maintenance requirements, making the drive unit more reliable and cost-effective over time.

Additionally, the constant guided length of the tendons may contribute to smoother and more efficient operation. By ensuring that the tendons move consistently within the sheaths, the mechanism may minimize friction and wear, resulting in smoother motion and improved responsiveness. This smooth operation may be particularly advantageous for applications requiring fine motor skills and precise control.

It may be provided that a compression spring is arranged at at least one of the ends of the sheath(s). The compression spring may be compressed by the at least one end of the sheath and by a counter support. Optionally, the counter support is part of the housing.

The inclusion of a compression spring at the sheath end may provide dynamic tensioning and shock absorption for the tendon mechanism. By compressing the spring between the sheath end and a counter support, the mechanism may allow for slight movement and flexibility, which can absorb external forces and vibrations. This dynamic tensioning may be beneficial for tasks requiring adaptable and compliant finger movements, such as interacting with delicate objects or humans.

It may be provided that at least two, preferably each, of the ends of the tendons is provided with a compression spring as described above.

Providing compression springs at both ends of the tendons may ensure balanced and dynamic tensioning throughout the tendon mechanism. By having springs at multiple points, the mechanism may evenly distribute tension and absorb shocks and vibrations from both ends. Further, by allowing for slight movement and flexibility at both ends, the springs may enable the mechanism to better absorb external forces and adapt to varying operational conditions. This adaptability may be beneficial for applications involving delicate interactions or unpredictable environments.

Additionally, having compression springs at both ends may contribute to maintaining consistent tension in the tendons. By compensating for minor variations and external forces from both directions, the springs may ensure that the tendons remain under optimal tension during operation.

Another aspect of the present disclosure relates to a robotic hand. The robotic hand may comprise a plurality of drive units as herein. Optionally, one drive unit is provided for each finger joint of the robotic hand.

Another aspect of the present disclosure relates to the use of a drive unit as described herein for controlling a robotic joint. The robotic joint may be a finger joint of a robotic hand.

The terms used herein should generally be construed as understood by the average person skilled in the art, unless explicitly indicated otherwise. The following explanations may guide the understanding:
The term "Drive unit" may be understood to refer to a functional assembly configured to generate and transmit mechanical energy to actuate at least one finger joint of a robotic hand. A drive unit typically comprises one or more components responsible for converting input energy, such as electrical energy generated by a motor, into controlled mechanical motion to drive the movement of finger segments about one or more finger joints. When combined with a tendon mechanism, a drive unit may be remotely located within the robotic system, with the mechanical energy being transmitted via tendons. In multi-jointed or dexterous robotic hands, multiple drive units may be employed, such as one for each finger joint, either independently or in coordination, to achieve fine-grained, multi-degree-of-freedom articulation.

The term "Finger joint" may be understood to refer to an articulating connection between two segments (or phalanges) of a finger of a robotic hand. A finger joint enables relative motion between adjacent segments, thereby allowing the finger to bend, extend, or rotate in a controlled manner. The joint may be configured to support one or more degrees of freedom, including flexion/extension (such as rotational motion typically around the X-axis, allowing the finger to bend and straighten), abduction/adduction (such as side-to-side movement, typically around the Z-axis, allowing fingers to spread apart or come together), and/or axial rotation (such as rotational motion around the longitudinal Y-axis, enabling the finger to twist or rotate), depending on the mechanical design and intended functionality of the robotic hand. A finger joint may be implemented using one or more of the following mechanisms: pin joints (allowing rotation around a single axis; 1 DoF), hinge joints (a specific type of pin joint, used to allow flexion/extension motion), ball-and-socket joints (also referred to as spherical joint; allows rotation around all three axes; 3 rotational DoF), universal joint (also referred to as cardan joint; allows rotation about two perpendicular axes; 2 DoF), planar joint (also referred to as sliding joint or prismatic joint; allows linear motion along one axis; 1 translational DoF), compliant joint (also referred to as flexure-based joint; achieves motion via material deformation rather than discrete pivot points). The motion of each finger joint in a robotic hand may be controlled or coordinated independently of other joints to enable complex finger movements, including grasping, pinching, or in-hand manipulation.

The term "Motor" may be understood to refer to a device that converts input energy, typically electrical, pneumatic, or hydraulic, into mechanical motion, which can then be used to actuate one or more components of a robotic system, such as a finger joint of a robotic hand. In a robotic hand, the motor can be an electromechanical actuator, such as an electric motor, that produces rotational or linear output. An electric motor may be of various types, including but not limited to brushed DC motors, brushless DC (BLDC) motors, stepper motors, servo motors, linear motors.

The term "Nut" may be understood to refer to a mechanical component configured to engage with a corresponding screw shaft, typically via complementary helical threading, thereby forming part of a screw assembly for converting rotary motion into linear motion, or vice versa. The nut typically comprises a body having an internal thread formed along a bore extending through the body, the thread geometry being matched to the external thread of the screw shaft. When relative rotational motion is introduced between the nut and the screw shaft, the helical thread engagement causes one of the components (either the nut or the shaft) to translate linearly along the axis of the other.

A nut may take various forms and may include one or more of design features, such as internal thread profile (conforming to standard geometries such as trapezoidal (Acme), V-thread, or specialized profiles such as those used in ball screw assemblies), recirculating ball channels (in the case of a ball nut, enabling low-friction, high-efficiency motion through the use of ball bearings between the nut and screw shaft), anti-backlash mechanisms (such as split-nut designs or preloaded springs, to reduce or eliminate axial play during bidirectional motion), mounting features (such as flanges, holes, or threaded inserts for securing the nut to a moving platform or structure within the robotic system) and/or guidance elements (such as integrated bushings or alignment keys to constrain the nut to linear motion and prevent undesired rotation).

The term "Robotic hand" may be understood to refer to a mechanical appendage or end-effector that is operatively coupled to and controlled by a robotic system. A robotic hand is designed to interact with physical objects in the environment, typically by applying controlled motion and force for the purpose of manipulation. Such a device generally comprises one or more articulated fingers, grippers, or similar mechanical structures that can be independently or jointly actuated to perform a wide range of manual tasks, including but not limited to grasping, holding, lifting, rotating, repositioning, or otherwise manipulating objects of various shapes, sizes, and materials.

A robotic hand may be configured as a dexterous robotic hand, meaning that it exhibits a high degree of fine motor control and adaptability, enabling it to perform complex manipulation tasks that closely resemble those of a human hand. A dexterous robotic hand may comprise multiple degrees of freedom in each finger, tactile or force sensors for feedback control, and/or compliant actuation mechanisms to allow for adaptive gripping, precision handling, or in-hand object reorientation. The dexterity of the robotic hand may be particularly advantageous in applications requiring delicate operations, such as assembling small components, handling fragile items, or performing tasks in unstructured or unpredictable environments.

The term "Screw assembly" may be understood to refer to a mechanical linear actuation mechanism comprising at least a screw shaft and a nut, wherein relative rotational motion between the screw shaft and the nut results in linear displacement of one of the components with respect to the other. A screw assembly is typically used to convert rotary motion into linear motion and may be employed in a robotic hand to actuate a finger joint.

In such a screw assembly, the screw shaft is typically an elongated, typically cylindrical component having a helical thread formed along its outer surface, and the nut is typically a complementary component having an internal thread configured to engage the thread of the screw shaft.

When the nut is rotated and the screw shaft is constrained against rotation, the screw shaft will move linearly. The direction and magnitude of the linear motion are determined by the direction of rotation and the thread pitch.

The screw assembly may be implemented using various types of thread geometries and technologies, including:
- Lead screw assemblies, typically used for precise linear motion at low speed and moderate load.
- Ball screw assemblies, which incorporate recirculating ball bearings between the screw shaft and the nut to reduce friction and increase efficiency.
- Acme thread or trapezoidal thread assemblies, commonly used for high-load applications.
- Roller screw assemblies, which utilize threaded rollers instead of balls to transfer load between the screw shaft and the nut, offering high load capacity, improved stiffness, and long service life, particularly in high-performance or continuous-duty applications.

The term "Screw shaft" may be understood to refer to an elongated mechanical component, typically having a substantially cylindrical shape, that serves as one element of a screw assembly. A screw shaft typically comprises a helical thread formed along at least a portion of its outer circumferential surface, the thread being configured to engage with a corresponding internal thread of a cooperating component, such as a nut. Such a helical thread may be formed as a continuous ridge (or multiple ridges in the case of multi-start threads), characterized by parameters such as thread pitch, thread angle, major and minor diameters, and lead, which collectively determine the motion profile and mechanical advantage of the screw assembly. The thread profile may conform to standardized geometries such as trapezoidal threads (e.g., Acme), V-threads, or specialized profiles such as those used in ball screws or self-locking configurations. A screw shaft may generally be configured to rotate about its longitudinal axis, whereby the rotational motion, when coupled with a nut constrained against rotation, results in axial translation of the nut along the screw shaft. Conversely, if the nut rotates and the screw shaft is constrained against rotation, the screw shaft may undergo linear motion.

The term "Tendon mechanism" may be understood to refer to a mechanical actuation system in which flexible elements, commonly referred to as tendons, cables, wires, strings or filaments, are used to transmit force and/or motion from an actuator (such as a motor) to a distal component, such as a finger, finger segment or finger joint of a robotic hand. A tendon mechanism typically comprises one or more tendons which may be routed through guiding structures (e.g., sheaths or low-friction conduits) along the length of the robotic finger or appendage.

By pulling on a tendon, a finger joint can be flexed or extended, depending on the routing configuration. Tendon mechanisms may operate in a unidirectional (pull-only) or bidirectional (pull-pull or push-pull) manner and may be paired with antagonistic tendons or passive return elements such as tension spring mechanisms to restore the finger joint to a neutral position.

Tendon mechanisms offer several advantages in robotic hand design, including low mass at the distal end (since actuators can be placed remotely), high compliance, and the ability to closely mimic the biomechanics of the human musculoskeletal system. They are particularly useful in dexterous robotic hands with many finger joints and limited construction space.

The term "Tension spring mechanism" may be understood to refer to a mechanical assembly that includes at least one tension spring, i.e., a spring configured to operate under tensile loading, used to apply or maintain a restorative pulling force between two components. The mechanism is typically designed such that the spring elongates when the connected components are displaced relative to one another and exerts a restoring force that tends to return the components to their original positions.

A tension spring, also referred to as an extension spring, typically comprises a helically wound coil of elastic material (e.g., metal wire), with end fixtures such as hooks, loops, or eyes that enable attachment to other mechanical elements. When the spring is stretched from its relaxed state, it stores potential energy, which is subsequently released to generate a contractive force.

In the context of a robotic hand or finger joint, a tension spring mechanism may serve one or more of the following purposes:
- To bias a joint or movable member toward a predefined default position (e.g., an open or closed finger configuration).
- To provide passive return motion after active actuation (e.g., returning a finger segment to its extended state after flexion).
- To implement compliant behavior, allowing adaptive movement in response to external forces while maintaining controlled joint stiffness.
- To act as part of an antagonistic actuation system, where a tension spring works in opposition to an active actuator (e.g., motor-driven tendon).

Particular and preferred aspects of the present disclosure are set out in the accompanying independent and dependent claims. Features from the dependent claims may be combined with features of the independent claims and with features of other dependent claims as appropriate and not merely as explicitly set out in the claims.

The above and other characteristics, features and advantages of the present disclosure will become apparent from the following detailed description, taken in conjunction with the accompanying drawings, which illustrate, by way of example, the principles of the disclosure. This description is given for the sake of example only, without limiting the scope of the disclosure.

### BRIEF DESCRIPTION OF THE DRAWINGS

The present disclosure may be better understood by reference to the following drawings:
FIG. 1 illustrates a drive unit for a finger joint of a robotic hand in accordance with one embodiment.
FIG. 2 illustrates a drive unit for a finger joint of a robotic hand in accordance with another embodiment.
FIG. 3 illustrates four variations of a screw shaft and assembled tendon mechanism in accordance with certain embodiments.
FIG. 4 illustrates a robotic hand in accordance with one embodiment.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

According to various embodiments of the present disclosure, advantageous mechanisms are provided for actuating a robotic hand, in particular a dexterous robotic hand, or other robotic manipulators. Certain embodiments employ a freely suspended screw drive, such as a ball screw assembly, without the need for a force-bearing linear guide. Unlike conventional designs that rely on rigid linear guides to support axial and transverse loads, the screw shaft in certain embodiments is unguided or only loosely guided, allowing for a highly compact and powerful actuation system that simultaneously offers a high degree of compliance to external disturbances, such as shocks or misalignments. In some implementations with a certain guiding structure, such guiding structure serves merely to prevent the rotation of the screw shaft, rather than bearing the main mechanical loads, thereby reducing complexity and increasing the robustness of the overall system.

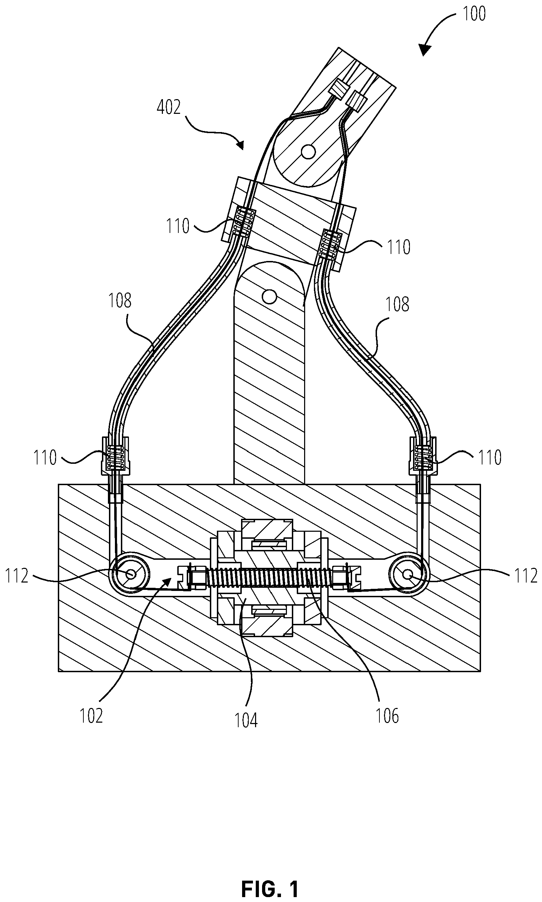

FIG. 1 illustrates a drive unit 100 for a finger joint 402 of a robotic hand 400 in accordance with one embodiment. The drive unit 100 comprises a screw assembly 102 including a nut 104 and a screw shaft 106. The screw assembly 102 is used to transform rotary motion from an electric motor into a linear motion of the screw shaft 106 at a desired transmission ratio. The screw shaft 106 is connected to a tendon mechanism 108 that is guided around roller bearings 112. The screw shaft 106 moves the tendon mechanism 108, which is in turn connected to the articulated finger joint 402.

In certain embodiments, the nut 104, the screw shaft 106, or ideally both, are freely suspended, i.e., not statically fixed or linearly guided. In certain embodiments, the nut 104 is mounted rotatably inside the motor, such as a frameless BLDC motor, within a housing (using a bushing) and two bearings. The rotor component of the motor (e.g., a permanent magnet) can be mounted directly on (the bushing of) the nut 104. The stator component of the motor (containing the windings) can be mounted statically in the housing component. This allows the nut 104 to rotate as commanded by the motor. In a preferred embodiment, the screw shaft 106 of the screw assembly 102 does not have any fixed mounting points. As such, without any external load, the screw shaft 106 would simply rotate with the nut 104.

Avoiding the use of conventional guiding elements used in screw assemblies, such as linear rails, helps to reduce the number of components required and results in a more compact and more power-dense mechanism.

In certain embodiments, the drive unit 100 comprises an antagonistic tendon mechanism 108 to actuate the finger joint 402 of the robotic hand 400. In the illustrated embodiment, the tendon mechanism 108 comprises a flexor and extensor tendon attached to opposite ends of the screw shaft 106 and mounted with a defined pre-tension of the tendon.

As one option, the pre-tension can be applied by a tensionable tendon fixture on the articulated body or at the tendon attachment points to the screw shaft 106, in which the tendon can either be pulled tight manually and then fixed in-place with a screw, or fixed to a threaded component using a crimp (such as a looped end or ball crimp) which can then be tensioned by turning the threaded component and increasing the tendon length.

As another option, the pre-tension can be applied by adjusting the tension of a Bowden cable mechanism. This may be achieved by placing the end of the Bowden cable (which may comprise an inner tendon or cable and an outer sheath or tube) in a threaded component (e.g., by placing or attaching the end of the Bowden cable sheath into or to the threaded component and by guiding the Bowden cable tendon through the threaded component without fixation). Turning this component can increase or decrease the tension on the Bowden cable in the sense that the tendon is tensioned by increasing the tendon path length while the sheath length remains constant.

In both configurations, the pre-tensioned tendon exerts a pulling force on the screw shaft 106 which ensures that motor rotation smoothly translates to a linear movement of the screw shaft 106 and tendon which then drives the finger joint 402.

In certain embodiments, the tendon may be guided through a Bowden cable, a single or multi-layered sheath, to create a low friction guide for the tendon along an arbitrary path. Conventional Bowden cables are fixed at both ends, i.e., at the entry and exit points for the tendon, to ensure a constant length of the tendon path. By contrast, certain embodiments can use a compression spring 110 between one or both ends of the Bowden cable and the housing. This spring can act similar to a spring-loaded tension roller in a belt drive system. It can maintain the Bowden cable slightly bent, creating a longer tendon path when no external loads are applied. Under external loads, e.g. and impact or shock, the tension on the tendon can drive the tendon to shorten its path by compressing the springs and therefore straightening the Bowden cable resulting in a shorter tendon path. This effect results in a compliant behavior of the actuated finger joint 402.

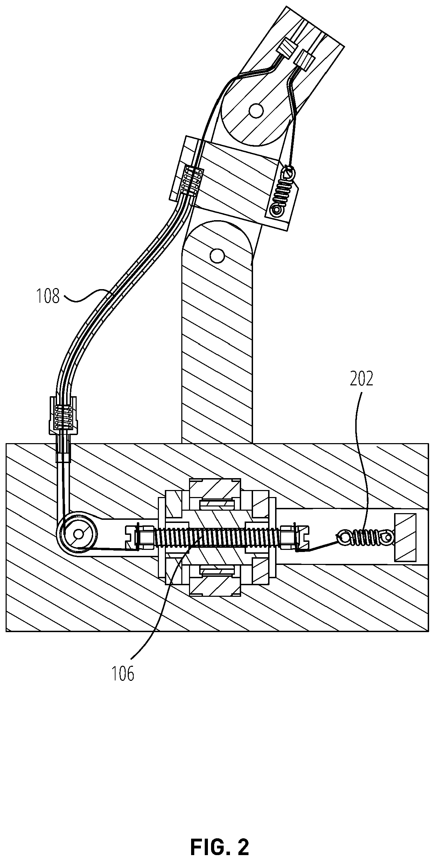

FIG. 2 illustrates a drive unit for a finger joint of a robotic hand in accordance with another embodiment. In this embodiment, instead of an antagonistic tendon mechanism as described in connection with FIG. 1, only a single tendon mechanism 108 can be used to drive a finger joint with a spring extensor. In this case, only one tendon is fixed to only one end of the screw shaft 106. To constrain the screw shaft 106's movement and/or orientation and provide the necessary tension for the tendon mechanism, a tension spring mechanism 202 is attached to the other end of the screw shaft 106.

Using such a single-tendon construction, the tension spring 202 acting on the screw shaft 106 may be used to act in the direction of closing the fingers of the robotic hand, resulting in a closed grasp as a resting state of the system. The motors can then work against the springs 202 to open the robotic hand. This can save a great amount of energy for holding grasps over time. To actively close the robotic hand, the motor can drive the screw shaft in the same direction that the spring 202 is acting. This increases the grasping force by adding motor/screw force and spring force.

In certain embodiments, the attachment point of the tension spring 202 may be adjusted using another actuator that moves the attachment point closer or further from the screw shaft 106 and thereby controls the pre-tension of the spring. This can be used to create different settings for the grasping force to be best suited for an application and optimize the heat properties and energy consumption of the motor in the open/closed grasping state.

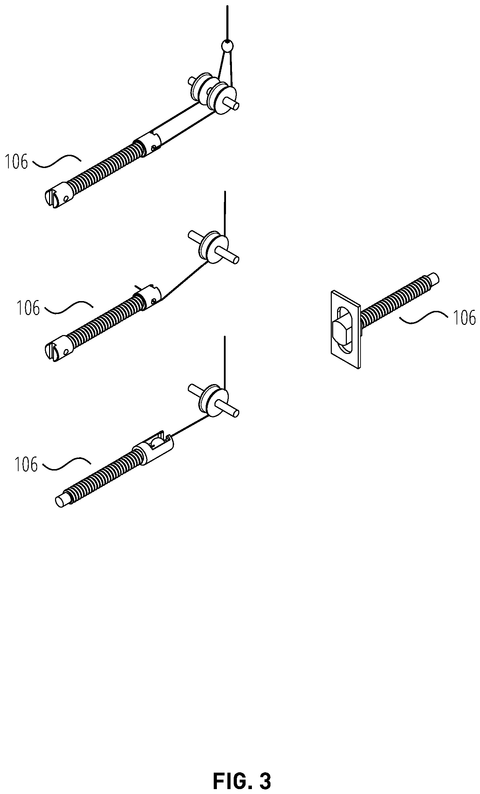

FIG. 3 illustrates four variations of a screw shaft 106 and assembled tendon mechanism in accordance with certain embodiments.

In certain embodiments, the tendon fixation at the screw shaft 106 may be realized with a loop, so that two tendon branches of the loop are guided across a roller which helps to maintain the screw shaft 106 oriented correctly.

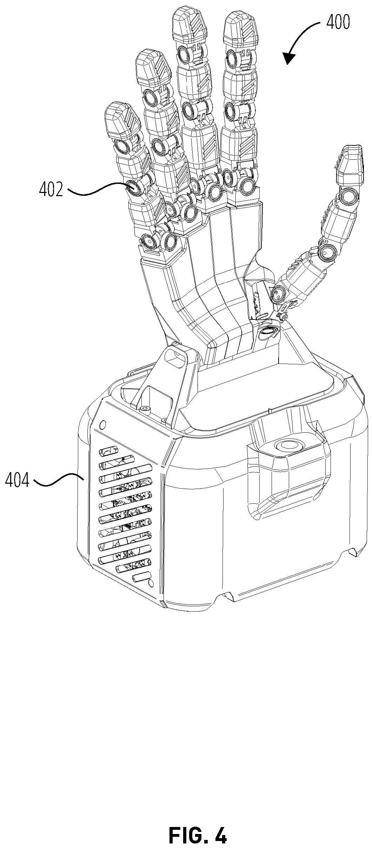

FIG. 4 illustrates a robotic hand in accordance with one embodiment. In the illustrated embodiment, the robotic hand 400 has a total of 20 finger joints 402, namely four finger joints 402 in each of the thumb, index finger, middle finger, ring finger, and pinky. The illustrated embodiment is merely for illustration, while the disclosed concepts can be applied to robotic hands or other robotic manipulators with any number of finger joints, or joints in general.

In certain embodiments, the robotic hand 400 comprises a dedicated drive unit 100 as described above for each finger joint 402. The drive units 100 and corresponding motors and tendon mechanisms may be arranged in a base unit 404 of the robotic hand 400.

In certain embodiments, the robotic hand 400 comprises multiple articulated finger joints 402 per finger, each finger joint 402 driven by one motor and tendon mechanism. In such a configuration, the tendons driving the upper (distal) finger joints can pass the previous finger joints being guided using a roller rotatably mounted on the same shaft of the joint.

While various aspects and embodiments have been illustrated and described in detail in the drawings and foregoing description, such illustration and description is to be considered illustrative or exemplary and not restrictive. Variations to the disclosed embodiments can be understood and effected by those skilled in the art in practicing the claimed subject-matter, from a study of the drawings, the disclosure, and the appended claims.

Although some aspects have been described in the context of an apparatus, device or system, these aspects also represent a description of the corresponding method, where a block or device corresponds to a method step or a feature of a method step. Analogously, aspects described in the context of a method step also represent a description of a corresponding block or item or feature of a corresponding apparatus, device or system.

In the claims, the word "comprising" does not exclude other elements or steps, and the indefinite article "a" or "an" does not exclude a plurality. A single entity may fulfill the functions of several entities recited in the claims. The mere fact that certain measures are recited in mutually different dependent claims does not indicate that a combination of these measures cannot be used to advantage. Any reference signs in the claims should not be construed as limiting the scope.

### REFERENCE SIGNS

100 drive unit
102 screw assembly
104 nut
106 screw shaft
108 tendon mechanism
110 compression spring
112 roller bearing
202 tension spring mechanism
400 robotic hand
402 finger joint
404 base unit

## Claims

1. A drive unit (100) for a finger joint (402) of a robotic hand (400), comprising:
a screw assembly (102) including a nut (104) and a screw shaft (106), wherein the nut (104) is rotatably mounted within a housing and the screw shaft (106) is freely suspended;
a motor configured to drive the nut (104); and
a tendon mechanism (108) for actuating the finger joint (402) when the screw shaft (106) is moved axially;
wherein the tendon mechanism (108) is configured to exert an essentially axial pulling force on the screw shaft (106), preferably the tendon mechanism (108) being pre-tensioned.

2. The drive unit of claim 1, wherein the nut (104), being rotatably mounted in the housing, is axially mounted via at least one roller bearing (112), preferably being an axial roller bearing.

3. The drive unit of claim 1 or 2, wherein the drive unit (100) further comprises a rotation blocking mechanism and/or a rotation constrainment mechanism configured to respectively block or constrain rotational movement of the screw shaft (106) around its axial main axis;
wherein, optionally, the screw shaft (106) is applied with rotational friction by a friction applying unit constituting a rotation constrainment mechanism, the friction applying unit being a component with a hole through which the screw shaft (106) is guided to apply friction to the screw shaft (106);
wherein, optionally, the component is a plate;
wherein, optionally, the hole is an elongated hole.

4. The drive unit of any one of claims 1 to 3, wherein the tendon mechanism (108) comprises a first tendon;
wherein one end of the first tendon is fixed to a first engagement point of the finger joint (402) and another end of the first tendon is fixed to a first end of the screw shaft (106);
wherein, optionally, the tendon mechanism (108) comprises a second tendon;
wherein, optionally, one end of the second tendon is fixed to a second engagement point of the finger joint (402) and another end of the second tendon is fixed to a second end of the screw shaft (106).

5. The drive unit of claim 4, wherein the fixing of the one end of the first tendon to the first end of the screw shaft (106) is designed to have a radial offset with respect to an axial main axis of the screw shaft (106);
wherein, optionally, the fixing of the one end of the second tendon to the second end of the screw shaft (106) is designed to have a radial offset with respect to the axial main axis of the screw shaft (106).

6. The drive unit of claim 4 or 5, wherein pre-tension is applied to the tendon mechanism (108) by a first tensioning unit being arranged at the first tendon, and, optionally, by a second tensioning unit being arranged at the second tendon.

7. The drive unit of claim 6, wherein the first tensioning unit is arranged at the first engagement point of the finger joint (402) or at the first end of the screw shaft (106) to which the first tendon is fixed; and
wherein, optionally, the second tensioning unit is arranged at the second engagement point of the finger joint (402) or at the second end of the screw shaft (106) to which the second tendon is fixed;
wherein, optionally, the first and/or second tensioning unit is configured to pull the first tendon tight manually and then being fixed in place with a screw; or
wherein, optionally, the first and/or second tensioning unit is configured to fix the first tendon to a threaded component using a crimp, such as a looped end or ball crimp which can then be tensioned by turning the threaded component; or
wherein, optionally, the first and/or second tensioning unit is configured to adjust a length of the first and/or second tension using a threaded component which is configured to increase and decrease the length of the first and/or second tendon in response to turning the same.

8. The drive unit of any one of claims 1 to 7, further comprising:
a tension spring mechanism (202) being attached to one of the first or second end of the screw shaft (106) applying a pulling force shifting the operating point of the drive unit (100) in that a resting position of the finger joint (402) is a pre-defined position of the finger joint (402).

9. The drive unit of claim 8, wherein the tension spring mechanism (202) is adjustable, optionally by moving the position of the tension spring mechanism (202) in a direction parallel to the axial main axis of the screw shaft (106).

10. The drive unit of any one of claims 1 to 9, wherein the tendon mechanism (108) is designed as a Bowden cable mechanism;
wherein, optionally, tendon(s) of the tendon mechanism (108) are at least for a partial length of the respective tendon(s) guided through single or multi-layered sheath(s) to ensure low friction of the tendon(s) when moving within the sheath(s).

11. The drive unit of claim 10, wherein ends of the sheath(s) are fixedly mounted such that the at least partial length of the respective tendon(s) being guided through the sheath(s) remains constant.

12. The drive unit of claim 10 or 11, wherein a compression spring (110) is arranged at at least one of the ends of the sheath(s), the compression spring (110) being compressed by the at least one end of the sheath and by a counter support;
wherein, optionally, the counter support is part of the housing.

13. The drive unit of any one of claims 4 to 12, wherein at least two, preferably each, of the ends of the tendons is provided with a compression spring (110) according to claim 12.

14. A robotic hand (400) comprising a plurality of drive units (100) according to any one of claims 1 to 13, optionally one drive unit (100) for each finger joint (402) of the robotic hand (400).

15. Use of a drive unit (100) according to any one of claims 1 to 13 for controlling a robotic joint;
wherein, optionally, the robotic joint is a finger joint (402) of a robotic hand (400).
